# EUROPÄISCHE PATENTANMELDUNG

(11) **EP 2 463 158 A1**
(43) Veröffentlichungstag der Anmeldung: **13.06.2012**
(21) Anmeldenummer: 11174852.1
(22) Anmeldetag: 21.07.2011
(51) Int. Cl.: B60R 16/02

(54) **Führungskette für ein Fahrzeug**

(30) Priorität: 23.07.2010 DE 102010038353
(71) Anmelder: S-Y Systems Technologies Europe GmbH, 93059 Regensburg (DE)
(72) Erfinder: Liedtke, Rüdiger, 26316 Varel (DE)
(74) Vertreter: Beck, Josef

(57) **Zusammenfassung**

Vorrichtung zum Anschließen einer Führungskette (3) zur Führung einer Leitung (34) von einem bewegbaren Teil (2) zu einem feststehenden Teil (5) einer Karosserie eines Fahrzeuges (1), wobei die Führungskette (3) ein Verbindungsstück (8) aufweist, wobei das Verbindungsstück (8) mit einem Anschlussstück (7) verbunden ist, das mit der Karosserie befestigbar ist, wobei die Verbindung zwischen dem Verbindungsstück (8) und dem Anschlussstück (7) in der Weise ausgebildet ist, dass die Führungskette (3) in einem festgelegten Bereich verschiebbar gegenüber dem Anschlussstück (7) ist.

## Beschreibung

Die Erfindung betrifft eine Vorrichtung zum Anschließen einer Führungskette.

Führungsketten zur Führung von elektrischen Leitungen zwischen einer Karosserie eines Fahrzeuges und beispielsweise einer Schiebetür sind aus EP 1375259 A1 bekannt.

Die Aufgabe der Erfindung besteht darin, eine verbesserte Vorrichtung zum Anschließen einer Führungskette bereitzustellen.

Die Aufgabe der Erfindung wird durch die Vorrichtung gemäß Patentanspruch 1 gelöst.

Weitere vorteilhafte Ausführungsformen sind in den abhängigen Ansprüchen angegeben. Ein Vorteil der erfindungsgemäßen Vorrichtung besteht darin, dass der Anschluss zwischen der Führungskette und einem Anschlussstück, das mit der Karosserie verbunden ist, ein Verschieben der Führungskette gegenüber dem Anschlussstück ermöglicht. Auf diese Weise ist es möglich, fertigungsbedingte Schwankungen auszugleichen, ohne dass die Verbindung zwischen der Führungskette und dem Anschlussstück beeinträchtigt wird.

In einer Weiterbildung der Vorrichtung weist das Anschlussstück ein Loch auf, wobei das Verbindungsstück einen Stift aufweist, wobei der Stift in das Loch eingreift, und wobei der Querschnitt des Loches größer ist als der Durchmesser des Stiftes. Auf diese Weise ist eine einfache und zuverlässige mechanische Verbindung zwischen dem Anschlussstück und dem Verbindungsstück bereitgestellt. Durch den größeren Querschnitt des Loches im Vergleich zum Durchmesser des Stiftes kann das Verbindungsstück auch dann noch mit dem Anschlussstück sicher verbunden werden, obwohl Abweichungen in der vorgesehenen Position des Anschlussstückes und/oder Abweichungen von der vorgesehenen Form und vorgesehenen Größe des Verbindungsstückes vorliegen. In einer bevorzugten Ausführungsform ist das Loch in Form eines Langloches ausgebildet, das entlang einer Längsrichtung der Führungskette ausgerichtet ist.

In einer weiteren Ausführungsform weist die Führungskette ein Verbindungsstück auf, wobei das Verbindungsstück ein Anlageelement für die Führungskette aufweist, wobei das Anlageelement Befestigungsmittel aufweist, mit denen das Anlageelement an der Karosserie befestigt werden kann. Das Anlageelement ist in der Weise ausgebildet, um eine Anlagefläche für wenigstens einen Abschnitt der Führungskette vor dem Anschlussstück in wenigstens einer Richtung bereitzustellen. Durch das Vorsehen des Anlageelementes wird eine Anlageführung der Führungskette vorzugsweise im letzten Abschnitt der Führungskette vor dem Anschlussstück erreicht. Damit wird sichergestellt, dass die Führungskette eine definierte Lage im letzten Abschnitt gegenüber dem Anschlussstück aufweist. Somit wird eine zuverlässige Funktion der Führungskette sichergestellt. Weiterhin wird durch das Anlageelement und die dadurch vorgegebene Anlageposition der Führungskette das Einbringen von unbeabsichtigten Kräften auf das Anschlussstück beispielweise durch eine Verkantung der Führungskette oder eine Verschiebung der Führungskette gegenüber einer gewünschten Position vermieden.

In einer weiteren Ausführungsform weist das Anlageelement zwei Anlageflächen auf, die im Wesentlichen parallel zu einer Längserstreckung der Führungskette und senkrecht dazu angeordnet sind. Durch diese Ausbildungsform wird die Führungskette sowohl auf einer Unterseite als auch auf einer Seitenfläche geführt. Damit ist eine präzisere Ausrichtung der Führungskette möglich. Zudem sorgen die Anlageflächen des Anlageelementes dafür, dass beispielsweise der Verschleiß der Führungskette reduziert ist, da ein Reiben und Scheuern der Führungskette auf der Karosserie vermieden wird. Dazu ist insbesondere das Material der Anlageflächen in der Weise gewählt, dass eine erhöhte Reibung zwischen der Führungskette und dem Anlageelement vermieden wird.

In einer weiteren Ausführungsform weist das Anlageelement Befestigungsmittel auf, die in der Weise ausgebildet sind, dass die Führungskette mit einer geringeren Toleranz gegenüber Verschiebungen wenigstens entlang der Längsrichtung der Führungskette an der Karosserie befestigt werden kann als mit dem Verbindungsstück an dem Anschlussstück. Dadurch werden Bewegungen und Kräfte der Führungskette in der Längsrichtung im Wesentlichen oder vollständig von den Befestigungsmitteln des Anlageelementes aufgenommen. Auf diese Weise wird vermieden, dass größere Kräfte der Führungskette über das Verbindungsstück an das Anschlussstück weitergegeben werden. Damit werden das Anschlussstück und folglich auch die Anschlussdose vor dem Einleiten größerer Kräfte geschützt. Auf diese Weise wird vermieden, dass die Anschlussdose und/oder Steckelemente der Anschlussdose verschoben oder gelöst werden.

In einer weiteren Ausführungsform sind das Verbindungsstück und das Anlageelement einteilig ausgebildet. Auf diese Weise wird eine präzise und sichere Ausrichtung der Führungskette erreicht. Zudem wird durch die einteilige Ausbildung eine sichere Verbindung zwischen dem Verbindungsstück und dem Anlageelement bereitgestellt.

In einer weiteren Ausführungsform weist die Führungskette ein Endstück auf. Das Endstück ist lösbar mit dem Verbindungsstück verrastet. Auf diese Weise ist es möglich, die Führungskette und das Verbindungsstück aus verschiedenen Materialien herzustellen. Weiterhin kann die Führungskette und das Verbindungsstück von verschiedenen Lieferanten hergestellt und geliefert werden.

In einer weiteren Ausführungsform ist gegenüberliegend zum Anlageelement eine Anlageplatte am Verbindungsstück vorgesehen, die zur Anlage an die Karosserie vorgesehen ist und ein Verkippen des Anschlussstückes aus einer Steckposition vermeiden soll. Die Anlageplatte kann parallel zum Anlageelement angeordnet sein. Durch das Vorsehen der Anlageplatte auf der einen Seite und das Anlageelement auf der anderen Seite ist eine große Anlagefläche auf beiden Seiten des Verbindungsstückes vorgesehen, mit der eine Ausrichtung und Anlage des Verbindungsstückes an der Karosserie möglich ist. Auf diese Weise kann ein Verkippen des Verbindungsstückes vermieden werden. Zudem wird die Montage des Verbindungsstückes auf das Anschlussstück durch diese Anlagefläche unterstützt, da eine parallele Ausrichtung der Anlagefläche erforderlich ist, um ein vollständiges Aufstecken des Verbindungsstückes auf das Anschlussstück zu ermöglichen. In einer weiteren Ausführungsform ist das Anschlussstück als Anschlussstück einer Anschlussdose ausgebildet. Die Anschlussdose ist in der Weise ausgebildet, um in eine Ausnehmung der Karosserie eingeschoben und in der Ausnehmung befestigt zu werden. Durch die Ausbildung des Anschlussstückes als Anschlussstück der Anschlussdose wird eine präzise Ausrichtung des Verbindungsstückes der Führungskette mit der Anschlussdose erreicht. Damit werden die elektrischen Leitungen, die über die Führungskette zur Anschlussdose geführt werden, ebenfalls präzise auf die Anschlussdose ausgerichtet. Zudem wird mit der Montage des Anschlussstückes die Anschlussdose verschlossen.

In einer weiteren Ausführungsform weist das Verbindungsstück ein Befestigungselement auf, mit dem wenigstens ein elektrisches Kabel am Verbindungsstück befestigt werden kann. Auf diese Weise ist zum Einen eine weitere präzise Ausrichtung des elektrischen Kabels möglich. Zudem ist eine Fixierung des elektrischen Kabels am Verbindungsstück möglich, sodass bei einem Zug auf das elektrische Kabel dieser Zug nicht auf eine Steckverbindung in der Anschlussdose weitergegeben wird, sondern auf das Befestigungselements des Verbindungsstückes übertragen wird. Damit wird eine Zugentlastung des elektrischen Kabels kurz vor einer Steckverbindung in der Anschlussdose erreicht.

In einer weiteren Ausführungsform weist das Anlageelement zwei Anlageflächen auf, die voneinander in einem Abstand angeordnet sind, wobei eine erste Anlagefläche zur seitlichen Anlage an die Karosserie und die zweite Anlagefläche als seitliche Anlage- und Führungsfläche für die Führungskette vorgesehen ist. Durch die Anordnung von zwei Anlageflächen kann zum einen eine präzise Ausrichtung des Anlageelementes zu einer Anlagefläche der Karosserie erreicht werden und zudem in einem bestimmten Abstand eine ebenfalls präzise seitliche Ausrichtung der Führungskette erreicht werden. Auf diese Weise ist die Ausrichtung der Führungskette nicht an die Anlagefläche der Karosserie gebunden, sondern kann abhängig von der Ausbildungsform der zweiten Anlagefläche unabhängig von der Anlagefläche der Karosserie geführt werden. Damit ist eine präzise und individuelle Ausrichtung der Führungskette möglich.

In einer weiteren Ausführungsform weist das Anlageelement eine dritte Anlagefläche auf, die zur Auflage einer Unterseite der Führungskette vorgesehen ist. Dadurch wird auch die Höhenposition der Führungskette vorgegeben, wobei zudem ein Abrieb der Führungskette reduziert werden kann, da die Führungskette nicht direkt auf der Karosserie aufliegt.

Die Erfindung wird anhand der Figuren näher erläutert. Es zeigen
Figur 1 eine schematische Darstellung eines Fahrzeuges,
Figur 2 einen schematischen Teilausschnitt mit Darstellung der Karosserie, der Führungskette und der Fahrzeugtür,
Figuren 3A und 3B schematische perspektivische Darstellungen der Führungskette vor dem Aufstecken auf die Anschlussdose,
Figur 4 eine vergrößerte Darstellung des Anschlussstückes,
Figur 5 eine monierte Führungskette,
Figur 6 eine weitere Ansicht auf das Anschlussstück,
Figur 7 eine vergrößerte Darstellung eines Teilquerschnittes durch das Kabel an der Zugentlastungsposition,
Figur 8 eine vergrößerte Darstellung des Endstückes der Führungskette, und
Figur 9 eine vergrößerte Darstellung der Montageposition des Anlageelementes.

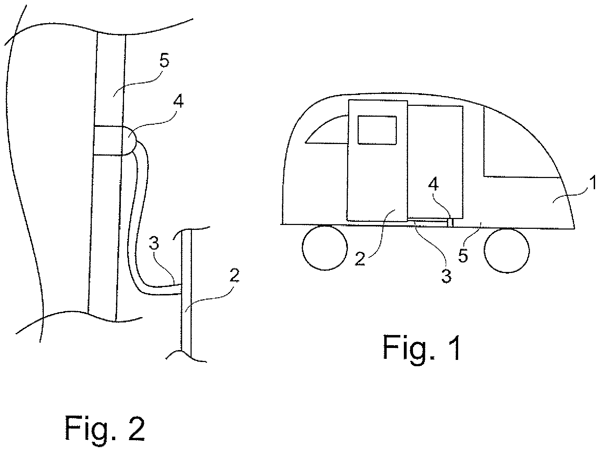

Figur 1 zeigt in einer schematischen Darstellung ein Fahrzeug 1 mit einer Karosserie mit einer geöffneten Schiebetür 2, wobei über eine Führungskette 3 elektrische Kabel von der Karosserie 1 zur Schiebetür 2 geführt werden.

Figur 2 zeigt in einer schematischen Teilansicht die Führung der Führungskette 3 mit einem Ende von der Schiebetür 2 zu einer Anschlussdose 4, an die ein zweites Ende der Führungskette 3 angeschlossen ist. Die Anschlussdose 4 ist in einer Ausnehmung eines Seitenschwellers 5 der Karosserie angeordnet.

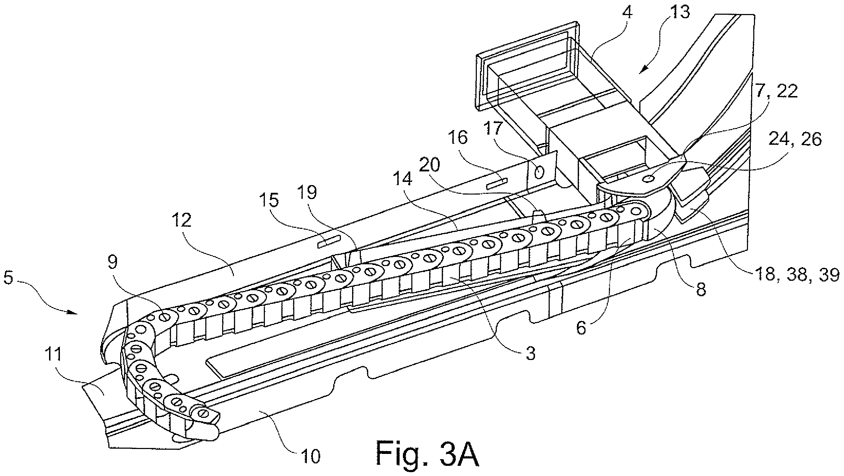

Figur 3 A zeigt in einer perspektivischen Darstellung einen Teil der Führungskette 3, die mit einem Endstück 6 zu einem Anschlussstück 7 der Anschlussdose 4 geführt ist. Das Endstück 6 steht mit einem Verbindungsstück 8 in Verbindung, das mit dem Anschlussstück 7 verbunden ist. Die Führungskette 3 weist eine Vielzahl von Kettengliedern 9 auf, wobei die Kettenglieder 9 gegeneinander verschwenkbar miteinander verbunden sind. Die Ansicht auf den Seitenschweller 5 ist im Bereich einer Schwellertasche dargestellt, wobei eine Außenwand 10 in eine Bodenfläche 11 und diese wiederum in eine innere Außenwand 12 übergeht. Die Anschlussdose 4 ist in einer Ausnehmung 13 des Seitenschwellers 5 angeordnet. Das Anschlussstück 7 ist in der dargestellten Anordnung noch nicht in die Anschlussdose 4 eingeschoben. Weiterhin ist ein Anlageelement 14 vorgesehen, das zwischen der Führungskette 3 und der inneren Außenwand 12 des Seitenschwellers 5 angeordnet ist und mit der Führungskette 3 verbunden ist. In der dargestellten Ansicht ist die elektrische Leitung, die durch die Führungskette 3 geführt wird, nicht dargestellt. Die Anschlussdose 4 ist fest mit dem Seitenschweller 5 verbunden und beinhaltet einen Anschlussstecker, der wiederum mit einem Anschlussstecker der elektrischen Leitung der Führungskette bei der Montage verbunden wird.

Die innere Außenwand 12 weist zwei Längslöcher 15, 16 und ein Querloch 17 auf. Die Ausrichtung der Längslöcher ist parallel zur Längserstreckung der Führungskette 3 ausgerichtet. Das Querloch 17 ist senkrecht zur Längserstreckung der Führungskette 3 ausgerichtet. Gegenüberliegend zum Anlageelement 14 ist wenigstens eine Anlageplatte 18 vorgesehen, die das Endstück 6 gegenüberliegend zur Führungskette 3 abdeckt. Die Anlageplatte 18 ist mit dem Verbindungsstück 8 verbunden. In der dargestellten Ausführungsform sind zwei parallele Anlageplatten 18 vorgesehen. Das Anlageelement 14 weist ein erstes, ein zweites und ein drittes Befestigungsmittel 19, 20 auf, die zur Befestigung des Anlageelementes 14 mit der inneren Außenwand 12 vorgesehen sind. Die Befestigungsmittel 19, 20 sind in Form von Rasthacken oder Rastzapfen ausgebildet.

Das Anschlussstück 7 weist eine obere und eine untere Platte 22 auf, in die jeweils ein erstes Loch 24, insbesondere ein Langloch eingebracht ist. Das Verbindungsstück 8 weist Zapfen 26 auf, die in die entsprechenden Löcher 24 der oberen und unteren Platte 22 eingerastet sind.

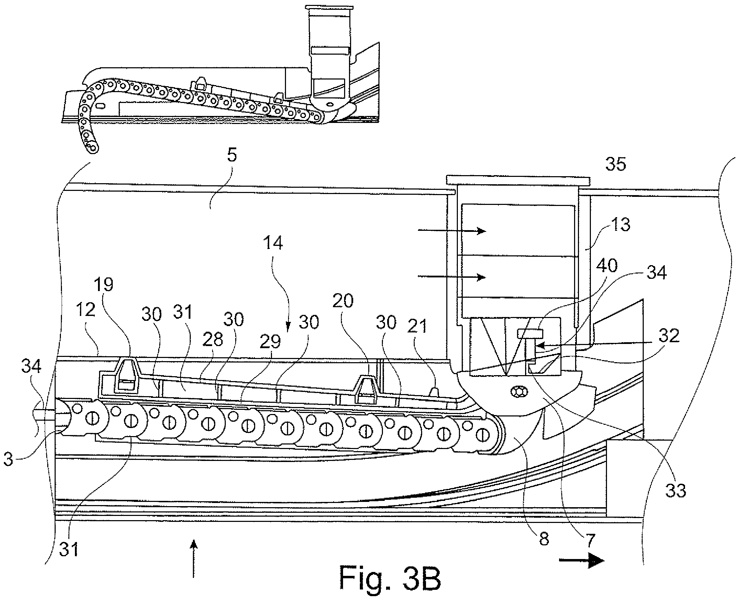

Figur 3B zeigt eine Ansicht von oben auf die Anordnung der Figur 3A. In dieser Ansicht ist deutlich erkennbar, dass das Anlageelement 14 eine erste und eine zweite Seitenwand 28, 29 aufweist, die über eine Bodenplatte 31 und Stege 30 miteinander verbunden sind. Die erste und die zweite Seitenwand 28, 29 sind in einem spitzen Winkel zueinander angeordnet. Die erste Seitenwand 28 ist zur Anlage an die innere Außenwand 12 des Seitenschwellers 5 vorgesehen. Die zweite Seitenwand 29 ist als Anlagefläche und Führungsfläche für die Führungskette 3 vorgesehen. Die Bodenplatte 31 ist ausgehend von der ersten Seitenwand 28 vorzugsweise im 90°-Winkel zur ersten Seitenwand 28 angeordnet und erstreckt sich entlang eines Endabschnittes der Führungskette 3 vorzugsweise über die gesamte Breite der Führungskette 3. Auf diese Weise bildet die Bodenplatte 31 eine Auflage- und Führungsfläche für eine Unterseite der Führungskette 3. In der Darstellung der Figur 3B ist schematisch ein elektrisches Kabel 34, das auch in Form eines Leitungsbündel mit mehreren Kabeln ausgebildet sein kann, dargestellt. Das Verbindungsstück 8 weist einen Haltebügel 32 auf, an dem beispielsweise mit Hilfe eines Kabelbinders 33 das elektrische Kabel 34 befestigt ist. Am Ende des elektrischen Kabels 34 ist ein Stecker 40 angeordnet, der vor der Montage in einen Gegenstecker eingesteckt wird, der in der Anschlussdose 4 angeordnet ist. Die Anschlussdose 4 ist in dem dargestellten Ausführungsbeispiel durch den gesamten Seitenschweller 5 bis in einen Innenraum 35 des Fahrzeuges geführt. Die elektrischen Leitungen des Gegensteckers sind in den Innenraum 35 geführt.

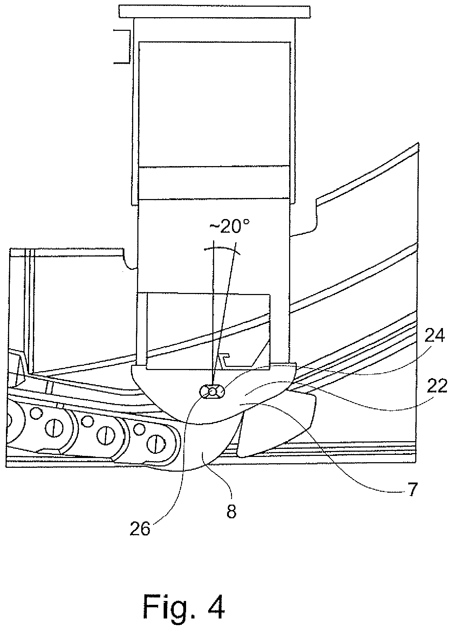

Figur 4 zeigt in einer vergrößerten Darstellung das erste Loch 24 der oberen Platte 22. Zudem ist der erste Zapfen 26 dargestellt. Der erste Zapfen 26 weist einen kleineren Durchmesser als das erste Loch 24 auf. In gleicher Weise ist auch in der unteren Platte ein zweites Loch angeordnet, in das ein zweiter Zapfen eingesteckt ist. Durch diese Ausbildung ist ein Lageausgleich zwischen dem Verbindungsstück 8 und dem Anschlussstück 7 möglich. Auf diese Weise ist es möglich, dass bei der Montage das Anschlussstück 7 gegenüber dem Verbindungsstück 8 und gegenüber der Führungskette verdreht werden kann. Somit ist eine einfache Montage, d. h. ein einfaches Einstecken des Anschlussstückes 7 in die Anschlussdose 4 möglich. Die Verdrehung kann in der Ebene der Anschlussdose beispielsweise bis zu 20° betragen.

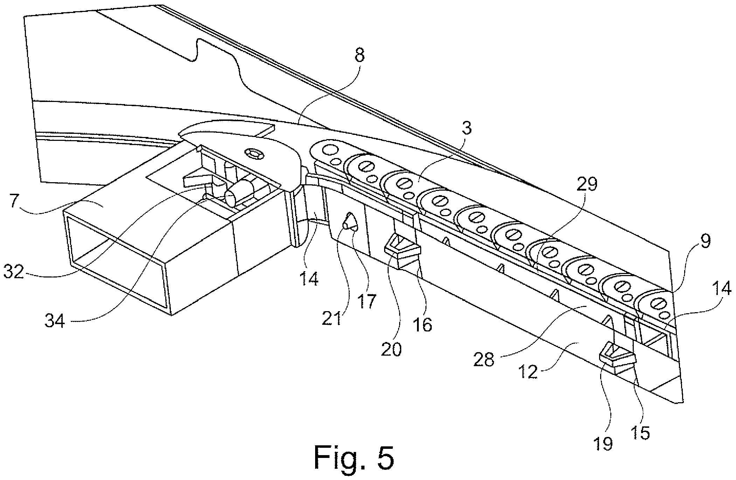

Figur 5 zeigt in einer schematischen Teildarstellung eine montierte Führungskette 3, bei der das Anschlussstück 7 in die nicht dargestellte Anschlussdose eingesteckt ist. Das Anlageelement 14 ist mit dem ersten, zweiten und dritten Befestigungsmittel 19, 20, 21 in die entsprechenden Ausnehmungen der inneren Außenwand 12 eingesteckt. Das erste und das zweite Befestigungsmittel 19, 20 sind in Form von doppelseitigen Rasthaken ausgebildet. Das dritte Befestigungsmittel 21 ist in Form eines einfachen Zapfens ausgebildet. Der Zapfen 21 und das entsprechende Loch 17 sind in der Weise ausgebildet, dass das Anlageelement 14 in gewissen Grenzen senkrecht zur Längserstreckung der Führungskette 3 bewegt werden kann. Das erste, das zweite und das dritte Befestigungsmittel 19, 20, 21 und die Langlöcher 15, 16, 17 sind in der Weise ausgelegt, dass eine Verschiebung des Anlageelementes 14 in der Längserstreckung der Führungskette 3 kaum oder nur in sehr engen Grenzen möglich ist. Aufgrund dieser Ausführungsform nimmt das Anlageelement alle Kräfte der Kette bei einer Bewegung der Führungskette auf. Die Steckverbindung zwischen dem Verbindungsstück 8 und dem Anschlussstück 7 bleibt dabei unbelastet, da die Verbindung über erste und zweite Löcher 24, 25, insbesondere Langlöcher, und entsprechende Zapfen 26, 27 erfolgt, die eine Bewegung in der Längserstreckung der Führungskette in einem gewissen Maße zulassen.

Aus der Figur 5 wird zudem deutlich ersichtlich, dass die zweite Seitenwand 29 nicht parallel, sondern in einem spitzen Winkel zur inneren Außenwand 12 verläuft. Zudem ist in der Darstellung die Figur 5 deutlich der Haltebügel 32 erkennbar, an dem das elektrische Kabel 34 befestigt ist.

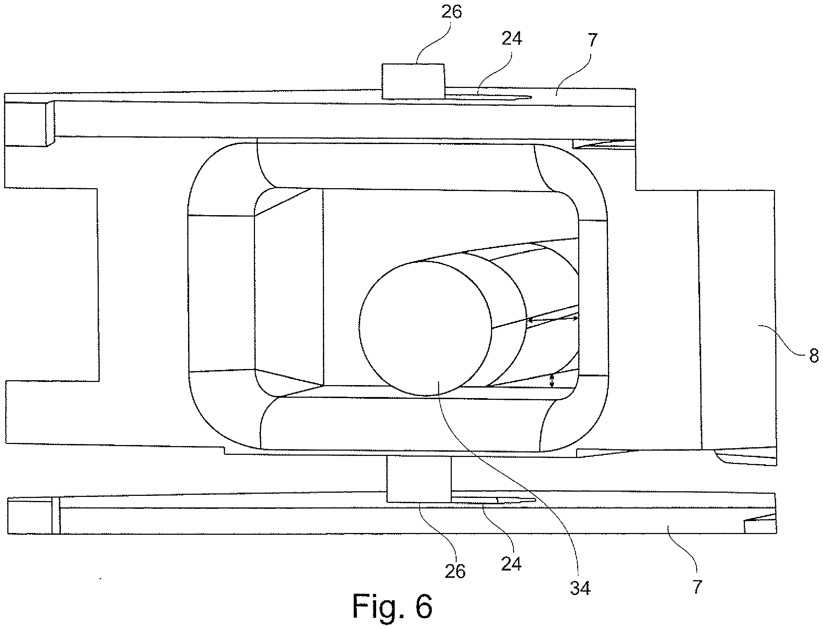

Figur 6 zeigt in einer weiteren schematischen Darstellung die maximale Ausgleichsmöglichkeit, die die gewählte Verbindung zwischen dem Verbindungsstück 8 und dem Anschlussstück 7 ermöglicht. Wie anhand dieser Darstellung erkennbar ist, können Abweichungen bezüglich der Position der Anschlussdose 4 und der Position des Verbindungsstückes 8 über die Löcher 24, 25 des Anschlussstückes 7 ausgeglichen werden. Dadurch wird ermöglicht, dass das Anlageelement 14 präzise in der Position in Bezug auf eine Längsverschiebung entlang der Längserstreckung der Führungskette 3 mit der Karosserie befestigt werden kann. Erst dadurch wird die Aufnahme der auftretenden Kräfte bei der Bewegung der Führungskette 3 über die Befestigung des Anlageelementes 14 mit der Karosserie ermöglicht.

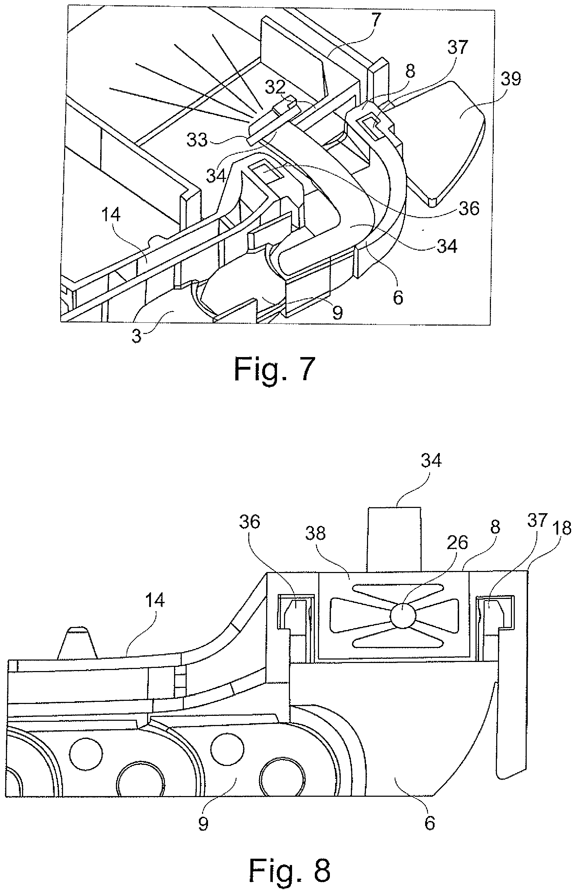

Figur 7 zeigt einen schematischen Querschnitt durch das Anschlussstück 7. Die Führungskette 3 weist das Endstück 6 auf, das mit einem Kettenglied 9 verbunden ist. Das Endstück 6 wiederum ist wiederum über Rasthaken 36, 37 mit dem Verbindungsstück 8 verrastet. Das Verbindungsstück 8 ist einteilig mit dem Anlageelement 14 und mit der Anlageplatte 18 ausgebildet. Der Haltebügel 32 ist in der dargestellten Ausführung als Teil des Anschlussstückes 7 ausgebildet. Das elektrische Kabel 34 ist über einen Kabelbinder mit dem Haltebügel 32 verbunden. Bewegungen zwischen der Anschlussdose 4 und der Führungskette werden durch das elektrische Kabel 34 im Bogen, d. h. durch unterschiedliche Biegungen im Übergang von der Führungskette 3 zur Anschlussdose 4 ausgeglichen.

Figur 8 zeigt in einer weiteren Ansicht eine Aufsicht auf das Verbindungsstück 8, in das das Endstück 6 über zwei Rasthaken 36, 37 verrastet ist. Das Verbindungsstück 8 weist eine obere und eine untere Platte 38 auf, aus der wiederum der erste bzw. der zweite Zapfen 26 herausragen. Die obere und untere Platte 38 sind parallel zueinander angeordnet.

Die Anlageplatten 18 sind mit einer Anlagekante im Wesentlichen parallel zur ersten Seitenwand 28 angeordnet. Die Anlageplatten 18 erstrecken sich ausgehend von einem oberen und einem unteren Endbereich des Verbindungsstückes 8 weg von dem Verbindungsstück und parallel zu der inneren Außenwand 12. Die erste und die zweite Anlageplatte 18 weisen vorzugsweise einen Abstand auf, der der Höhe der Führungskette 3 entspricht, und sind abschließend mit einer Oberseite und einer Unterseite der Führungskette 3 angeordnet. Auf diese Weise wird die gesamte Höhe der Führungskette 3 seitlich von den parallelen Anlageplatten 18 abgedeckt.

### Bezugszeichenliste

- 1: Fahrzeug
- 2: Schiebetür
- 3: Führungskette
- 4: Anschlussdose
- 5: Seitenschweller
- 6: Endstück
- 7: Anschlussstück
- 8: Verbindungsstück
- 9: Kettenglied
- 10: Außenwand
- 11: Bodenfläche
- 12: innere Außenwand
- 13: Ausnehmung
- 14: Anlageelement
- 15: erstes Langloch
- 16: zweites Langloch
- 17: Querloch
- 18: Anlageplatte
- 19: erstes Befestigungsmittel
- 20: zweites Befestigungsmittel
- 21: drittes Befestigungsmittel
- 22: obere Platte
- 23: untere Platte
- 24: erstes Loch
- 25: zweites Loch
- 26: erster Zapfen
- 27: zweiter Zapfen
- 28: erste Seitenwand
- 29: zweite Seitenwand
- 30: Stege
- 31: Bodenplatte
- 32: Haltebügel
- 33: Kabelbinder
- 34: elektrisches Kabel
- 35: Innenraum
- 36: erster Rasthaken
- 37: zweiter Rasthaken
- 38: Platte
- 39:
- 40: Stecker

## Patentansprüche

1. Vorrichtung zum Anschließen einer Führungskette (3) zur Führung einer Leitung (34) von einem bewegbaren Teil (2) zu einem feststehenden Teil (5) einer Karosserie eines Fahrzeuges (1), wobei die Führungskette (3) ein Verbindungsstück (8) aufweist, wobei das Verbindungsstück (8) mit einem Anschlussstück (7) verbunden ist, das mit der Karosserie befestigbar ist, wobei die Verbindung zwischen dem Verbindungsstück (8) und dem Anschlussstück (7) in der Weise ausgebildet ist, dass die Führungskette (3) in einem festgelegten Bereich verschiebbar gegenüber dem Anschlussstück (7) ist.

2. Vorrichtung nach Anspruch 1, wobei das Anschlussstück (7) ein Loch (24) aufweist, wobei das Verbindungsstück (8) einen Zapfen (26) aufweist, wobei der Zapfen (26) in das Loch (24) eingreift, und wobei der Querschnitt des Loches (24) größer ist als der Durchmesser des Zapfens (26).

3. Vorrichtung nach Anspruch 2, wobei das Verbindungsstück (8) an gegenüberliegenden Seiten jeweils einen Zapfen (26) aufweist, und wobei das Anschlussstück (7) an gegenüberliegenden Seiten jeweils ein Loch (24) aufweist, in denen jeweils ein Zapfen eingesteckt ist.

4. Vorrichtung nach einem der Ansprüche 1 bis 3, wobei das Verbindungsstück (8) ein Anlageelement (14) für die Führungskette (3) aufweist, wobei das Anlageelement (14) Befestigungsmittel (19, 20, 21) aufweist, mit denen das Anlageelement (14) an der Karosserie befestigt werden kann, wobei das Anlageelement (14) ausgebildet ist, um eine Anlagefläche für wenigstens einen Abschnitt der Führungskette (3) vor dem Anschlussstück (7) in wenigstens einer Richtung bereitzustellen.

5. Vorrichtung nach Anspruch 4, wobei das Anlageelement (14) zwei Anlageflächen (29, 31) aufweist, die im Wesentlichen parallel zu einer Längserstreckung der Führungskette (3) und senkrecht dazu angeordnet sind.

6. Vorrichtung nach einem der Ansprüche 4 oder 5, wobei die Befestigungsmittel (19, 20, 21) des Anlageelementes (14) in der Weise ausgebildet sind, dass die Führungskette (3) mit einer geringeren Toleranz gegenüber Verschiebungen entlang der Längsrichtung der Führungskette (3) an der Karosserie (5) befestigt werden kann als mit dem Verbindungsstück (8) an dem Anschlussstück (7), so dass Bewegungen der Führungskette (3) im Wesentlichen von den Befestigungsmitteln (19, 20, 21) des Anlageelementes (14) aufgenommen werden.

7. Vorrichtung nach einem der Ansprüche 4 bis 6, wobei das Verbindungsstück (8) und das Anlageelement (14) einteilig ausgebildet sind.

8. Vorrichtung nach Anspruch 7, wobei die Führungskette (3) ein Endstück (6) aufweist, wobei das Endstück (6) lösbar mit dem Verbindungsstück (8) verrastet ist.

9. Vorrichtung nach einem der Ansprüche 4 bis 8, wobei gegenüberliegend zum Anlageelement (14) eine Anlageplatte (18) am Verbindungsstück (8) vorgesehen ist, die zur Anlage an die Karosserie vorgesehen ist und einem Verkippen des Anschlussstückes (7) aus einer Steckposition in der Anschlussdose (4) entgegenwirkt.

10. Vorrichtung nach einem der Ansprüche 4 bis 9, wobei das Anlageelement (14) ein Befestigungsmittel (21) aufweist, wobei die Karosserie ein zugeordnetes Befestigungsmittel (17) aufweist, wobei die Befestigungsmittel in der Weise ausgebildet sind, um eine Bewegung des Anlageelementes (14) gegenüber der Karosserie senkrecht zur Längsrichtung der Führungskette (3) zu ermöglichen und in der Längsrichtung der Führungskette zu beschränken.

11. Vorrichtung nach einem der Ansprüche 1 bis 10, wobei das Anschlussstück (7) als Abschlussstück einer Anschlussdose (4) ausgebildet ist.

12. Vorrichtung nach Anspruch 11, wobei die Anschlussdose (4) vorgesehen ist, um in einer Ausnehmung (13) der Karosserie (5) befestigt zu werden.

13. Vorrichtung nach einem der Ansprüche 1 bis 12, wobei das Verbindungsstück (8) ein Befestigungselement (32) zum Befestigen wenigstens eines elektrischen Kabels (34) aufweist.

14. Vorrichtung nach einem der Ansprüche 4 bis 13, wobei das Anlageelement zwei Anlageflächen (28, 29) aufweist, die voneinander in einem Abstand angeordnet sind, wobei eine erste Anlagefläche (28) zur seitlichen Anlage an die Karosserie (5, 12) und die zweite Anlagefläche (29) als seitliche Anlagefläche für die Führungskette (3) vorgesehen ist.

15. Vorrichtung nach einem der Ansprüche 4 bis 14, wobei das Anlageelement eine dritte Anlagefläche (31) aufweist, die zur Auflage einer Unterseite der Führungskette (3) vorgesehen ist.
